# EUROPEAN PATENT APPLICATION

(11) **EP 2 104 065 A1**
(43) Date of publication of application: **23.09.2009**
(21) Application number: 09154560.8
(22) Date of filing: 06.03.2009
(51) Int. Cl.: G06Q 30/00

(54) **Display apparatus and control method thereof**

(30) Priority: 19.03.2008 KR 20080025550
(71) Applicant: SAMSUNG ELECTRONICS CO., LTD., Suwon-City, Kyungki-do (KR)
(72) Inventor: Noh, Young-joong, Gyeonggi-do (KR); Kim, Woo-jung, Gyeonggi-do (KR); Jang, Dae-hyun, Gyeonggi-do (KR); KIM, Seong-hyun, Seoul (KR)
(74) Representative: Walaski, Jan Filip

(57) **Abstract**

A display apparatus and a control method thereof are provided. The apparatus includes a display unit (50), a signal processing unit (40), a mode setting unit (10) which sets an environmental mode to one of an exhibition mode and a general mode, and a control unit (60) which determines whether the set environmental mode is the exhibition mode and controls the signal processing unit to reproduce a predetermined advertisement contents and the display unit (50) to display the reproduced advertisement contents if the environmental mode is the exhibition mode. It is possible to provide an advertisement contents using the display apparatus and the control method thereof.

## Description

The present invention relates to display apparatuses and control methods thereof, and more particularly to display apparatuses which have a mode for displaying advertisement contents and control methods thereof.

A broadcasting signal includes advertisement contents which advertise various products and companies. A user may view the advertisement contents. Due to the rapid development of the Internet, people spend more time surfing web pages than watching TV. The time people are exposed to the advertisement contents is decreasing. This trend is diminishing the effects of advertising by an advertiser who uses a broadcasting signal as a medium for advertising. For the advertisement contents to be displayed without using a broadcasting signal, the display apparatus must be connected to an external advertisement contents source. This causes the cost and complexity of structure of the display apparatus to increase.

An aspect of the present invention is to provide display apparatuses which display advertisement contents easily and control methods thereof. Another aspect of the present invention is to provide display apparatuses which display the advertisement contents at low price and a method thereof.

According to an aspect of the invention, there is provided an apparatus having a display unit, which comprises a signal processing unit, a mode setting unit which sets an environmental mode to one of an exhibition mode and a general mode, and a control unit which determines whether the set environmental mode is the exhibition mode and controls the signal processing unit to reproduce predetermined advertisement contents and the display unit to display the reproduced advertisement contents if the environmental mode is the exhibition mode. The advertisement contents may have a specific file extension. The control unit may reproduce the advertisement contents based on the file extension. The apparatus may further comprise a user input unit which generates a control signal for reproducing the advertisement contents. The apparatus may further comprise a storage unit which stores at least one advertisement contents. The apparatus may further comprise an external interface which is connected to an external storage unit which stores at least one advertisement contents.

The apparatus may further comprise a user interface (UI) generating unit which generates a UI, wherein if the storage unit has a plurality of contents including the at least one advertisement contents, the control unit controls the UI generating unit to generate a content list of the at least one advertisement contents. If the at least one advertisement contents in the content list are selected through the user input unit, the control unit may control the signal processing unit to reproduce the selected advertisement contents. The UI generating unit may generate an advertisement content menu window for controlling reproduction of the advertisement contents. The advertisement content menu window may comprise at least one of sub menu windows for setting reproduction type, reproduction time, and display style. The reproduction type may comprise at least one of general reproduction, repeat reproduction, and interval reproduction. The display style may comprise at least one of a full display, a picture in picture (PIP), and a picture out picture (POP). The control unit may control the signal processing unit to reproduce the advertisement contents if there is no input of the control signal for reproducing the advertisement contents for a predetermined time.

If a setting signal for setting to the exhibition mode is received from the user input unit, the mode setting unit sets the environmental mode to the exhibition mode. If a setting signal for setting to the exhibition mode is not received for a predetermined time, the mode setting unit may set the environmental mode to the exhibition mode. The advertisement contents may comprise contents related to the display apparatus. The advertisement contents may comprise contents related to the manufacturer of the display apparatus.

According to another aspect of the invention, there is provided a control method of a display apparatus which sets an environmental mode, which comprises setting an environmental mode to one of a general mode and an exhibition mode, determining whether the set environmental mode is the exhibition mode, and displaying the advertisement contents if the set environmental mode is the exhibition mode. The control method may further comprise receiving a control signal for displaying the advertisement contents. The control method may further comprise generating a content list of the advertisement contents among displayable contents. The control method may further comprise generating an environmental content menu window for controlling reproduction of the advertisement contents. If there is no input of a control signal for displaying the advertisement contents for a predetermined time after the environmental mode is set to the exhibition mode, the advertisement contents may be displayed.

The above and other aspects and features of the present invention will be apparent from the following detailed description taken in conjunction with the accompanying drawings, in which:
FIG. 1 is a block diagram of a display apparatus according to an exemplary embodiment of the present invention;
FIG. 2 is a block diagram of a display apparatus according to another exemplary embodiment of the present invention;
FIG. 3 is a menu window for setting the environmental mode according to an exemplary embodiment of the present invention;
FIG. 4 is a content list according to an exemplary embodiment of the present invention;
FIG. 5 is a menu window for the advertisement contents according to an exemplary embodiment of the present invention;
FIGS. 6A to 6C are detail windows for setting the reproduction environment according to the exemplary embodiment of the present invention;
FIG. 7 illustrates a display apparatus on which the advertisement contents are reproduced according to an exemplary embodiment of the present invention; and
FIG. 8 is a flow chart for reproduction operations of the advertisement contents according to an exemplary embodiment of the present invention.

Hereinafter, exemplary embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as the detailed construction and elements, are merely specific details provided to assist those of ordinary skill in the art in a comprehensive understanding of the invention, and the present invention is only defined within the scope of the appended claims.

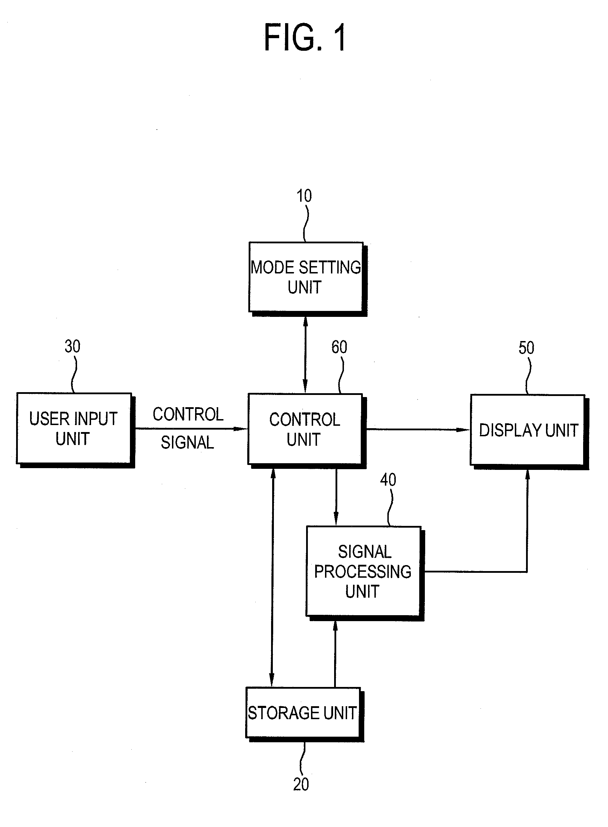

FIG. 1 is a block diagram of a display apparatus according to an exemplary embodiment of the present invention.

The display apparatus according to an embodiment of the present invention includes a mode setting unit 10, a storage unit 20, a user input unit 30, a signal processing unit 40, a display unit 50, and a control unit 60 which controls these units. The display apparatus according to an embodiment of the present invention may be implemented as a TV which receives a broadcasting signal and displays the signal, a monitor which is connected to a PC, etc.

The mode setting unit 10 sets an environmental mode to an exhibition mode or a general mode. The environmental mode is a display mode according to an environment on which an image signal is displayed. The exhibition mode of the environmental mode is a display mode for the display apparatus provided in an exhibition area or a shop for sale or exhibition. The exhibition mode may be called a shop mode. The general mode of the environmental mode is a display mode for the display apparatus provided in a home area to a user. The general mode may be called a home mode. The mode setting unit 10 may set the environmental mode to one of the exhibition mode and the general mode according to a setting signal provided by a user or may set a specific mode automatically if a certain condition is satisfied. For example, the mode setting unit 10 may set the environmental mode to the exhibition mode if there is no setting signal provided by a user for a predetermined time. The mode setting unit 10 stores information indicating whether the present environmental mode is the exhibition mode or the general mode. The information may be represented as an explicit digital value or a voltage value recognized by a physical switching operation.

The storage unit 20 stores at least one of advertisement contents. The advertisement contents may comprise contents related to the display apparatus or contents related to the manufacturing company of the display apparatus. For example, an advertisement about the company and products may be easily provided by reproducing advertisement contents related to other models manufactured by the company which manufactures the display apparatus. The advertisement contents may be reproduced as a moving image, a still image, or a sound instead of an image. This type of advertisement contents may have a unique file extension. The storage unit 20 may store an image file, an audio file, or a text file in addition to the advertisement contents. For distinguishing the advertisement contents from other types of files, the advertisement contents may have a unique file extension, for example 'AD'. This extension may be set when the advertisement contents are produced. The display apparatus may be programmed to distinguish a file which has a specific file extension and to reproduce the file. The storage unit 20 which stores an advertisement contents in this exemplary embodiment may be implemented by a flash memory within the display apparatus. The storage unit 20 may be equipped separately or implemented by the flash memory within the display apparatus.
In another exemplary embodiment, the advertisement contents may be stored in a specific directory. The advertisement contents may be stored in the specific directory, separated from other files. This makes it easy to reproduce only the advertisement contents.

The user input unit 30 generates a control signal to reproduce the advertisement contents stored in the storage unit 20. The user input unit 30 may be implemented as a direct operation key, which is called a 'hot key', provided in an exterior frame of the display apparatus. The advertisement contents may be reproduced by one touch manipulation of the key by a user without complicated manipulations. The user input unit 30 may be implemented by a remote controller, a mouse, etc. The control signal of the user input unit 30 may be generated by manipulation of a specific key in a remote controller or a mouse or by manipulation of several keys. The signal processing unit 40 processes all the image signals including the advertisement contents and outputs the processed signals to the display unit 50. If the display apparatus is a TV, the signal processing unit 40 decodes a broadcasting signal inputted through a tuner and outputs the decoded signals. If the display apparatus is connected to an external source, the signal processing unit 40 processes an input image signal and outputs the processed signal to the display unit 50. The signal processing unit 40 may include a decoder and a scaler which convert format and adjust a resolution to display on the display unit 50. The signal processing unit 40 may include an audio processing unit if the advertisement contents are an audio file.

The display unit 50 displays the advertisement contents and an image signal. The display unit 50 may be implemented by a Liquid Crystal Display (LCD), an Organic Light Emitting Display (OLED), a Plasma Display Panel (PDP), etc.

The control unit 60 controls the aforementioned units for the advertisement contents to be reproduced on the display unit 50. The control unit 60 determines whether the environmental mode is the exhibition mode based on the environmental mode information set in the mode setting unit 10 if a specific event happens, for example, a control signal is input through the user input unit 30. If the environmental mode is the exhibition mode, the control unit 60 controls the storage unit 20 and the signal processing unit 40 to reproduce the advertisement contents. Various kinds of image files in addition to the advertisement contents may be stored in the storage unit 20. The control unit 60 controls the storage unit 20 and the signal processing unit 40 to reproduce only the advertisement contents having the specific file extension. If the environmental mode is not the exhibition mode, that is, the environmental mode is the general mode, the control unit 60 does not reproduce the advertisement contents even if the control unit 60 receives the control signal for reproducing.

In another embodiment of the present invention, the control unit 60 may reproduce the advertisement contents automatically if there is no input of the control signal for reproducing for a predetermined time. This happens when the environmental mode is the exhibition mode. The control unit 60 may check whether the environmental mode is the exhibition mode periodically. If the environmental mode is set to the exhibition mode in an exhibition area or a shop, it may improve the advertisement effect to reproduce the advertisement contents without an additional control signal from a user.

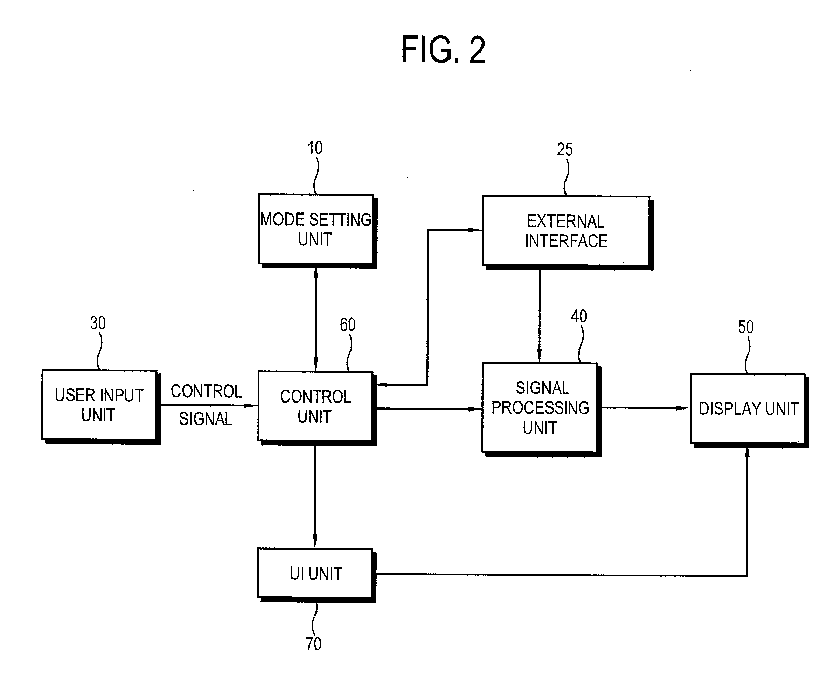

FIG. 2 is a block diagram of a display apparatus according to another exemplary embodiment of the present invention. The display apparatus according to the embodiment of the present invention further includes an external interface 25 and a User Interface (UI) generating unit 70.

In this exemplary embodiment, the advertisement contents are provided from an external storage connected to the external interface 25. The external interface 25 may be implemented as a Universal Serial Bus (USB) interface, a memory slot, etc. If the advertisement contents are stored in a memory included in the display apparatus, the display apparatus must have a large memory and this causes a cost increase of the display apparatus. But if the advertisement contents are stored in an external storage according to the exemplary embodiment, the advertisement contents may be reproduced by connecting the external storage to the display apparatus and sending the control signal.

The UI generating unit 70 provides a user a graphic interface in the display unit 50 for choosing whether to reproduce the advertisement contents.

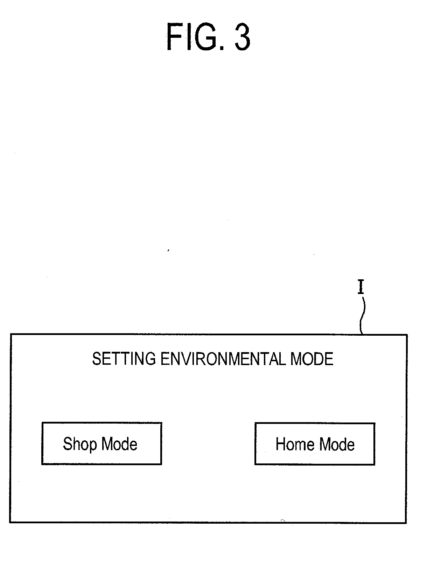

FIG. 3 is a menu window for setting the environmental mode (I). The menu window for setting the environmental mode (I) includes 'Shop mode' which is the exhibition mode and 'Home mode' which is the general mode to allow a user to choose a desired mode. A user may set or change the environmental mode using the menu window for setting the environmental mode (I). If the exhibition mode is chosen using the menu window for setting the environmental mode (I), the display unit 50 may display a graphic such as a text or an emoticon, which shows the present environmental mode. The environmental mode may be set in a Plug & Play process which turns on and boots the display apparatus.

In another embodiment of the present invention, the environmental mode may be set and changed using a specific key such as a direct operation key. The environmental mode may be changed if the direct operation key is pushed for a predetermined time. In another embodiment of the present invention, a condition for displaying an image in the display unit 50 may be changed if the environmental mode is the exhibition mode. Color temperature, gamma, brightness, etc. may be changed for displaying the advertisement contents more clearly and dynamically if the advertisement contents are a moving image.

The control unit 60 generates a contents list of the advertisement contents among a plurality of contents stored in the external storage which is connected through the external interface 25, if the control signal for reproducing advertisement or the signal for generating a UI is inputted through the user input unit 30. The external storage may store a movie or music other than advertisement, but the UI generating unit 70 may generate a content list (II) of only the advertisement contents by checking the file extension.

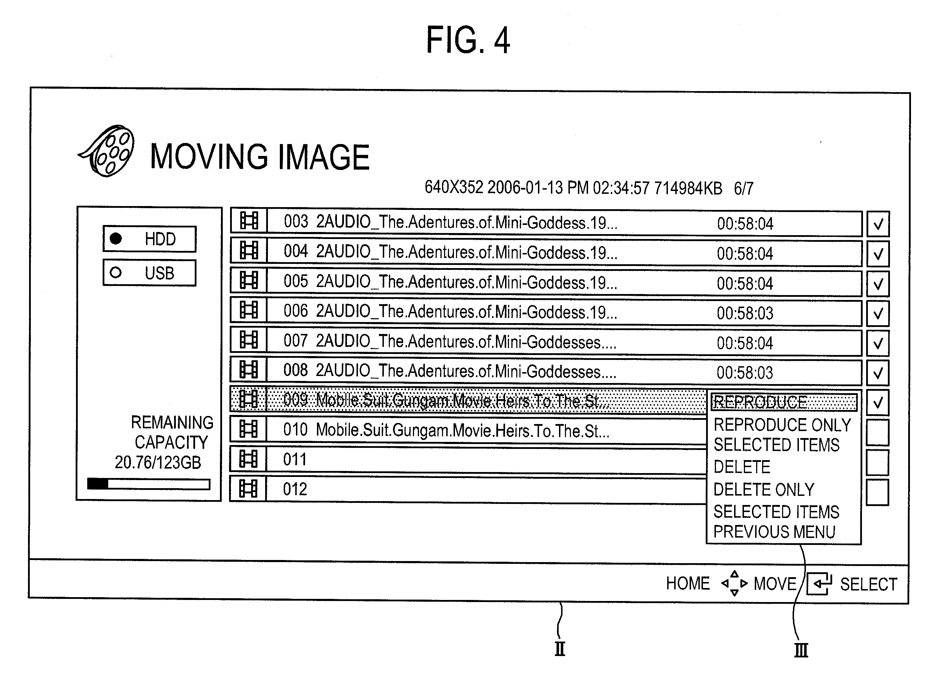

FIG. 4 is a content list (II) according to an exemplary embodiment of the present invention. Referring to FIG. 4, the content list (II) includes contents names and reproducing times for a plurality of advertisement contents. The content list (II) may include whether the advertisement is a moving image or a still image, whether the memory is an internal memory such as a HDD or an external memory such as a USB, and remaining capacity of the external storage. The content list (II) may include checking areas for respective advertisement contents. A user may select the advertisement contents the user wants to reproduce among all the advertisement contents. If a user selects advertisement contents, the contents may be active. If advertisement contents are active, a sub menu window (III) for controlling the advertisement contents is displayed. The sub menu window (III) may include menus such as 'reproduce', 'reproduce only selected items', 'delete', 'delete only selected items', and 'previous menu'. A user may select a menu in the sub menu window (III) through the user input unit 30.

In another embodiment of the present invention, if a selection signal for selecting advertisement contents is not inputted while the content list (II) is displayed in the display unit 50, the control unit 60 may reproduce the stored advertisement contents sequentially.

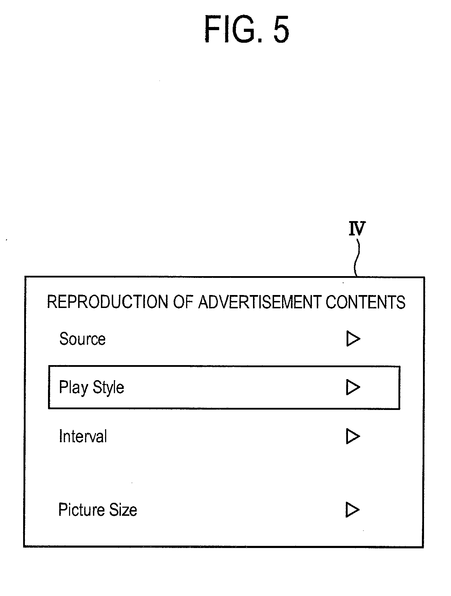

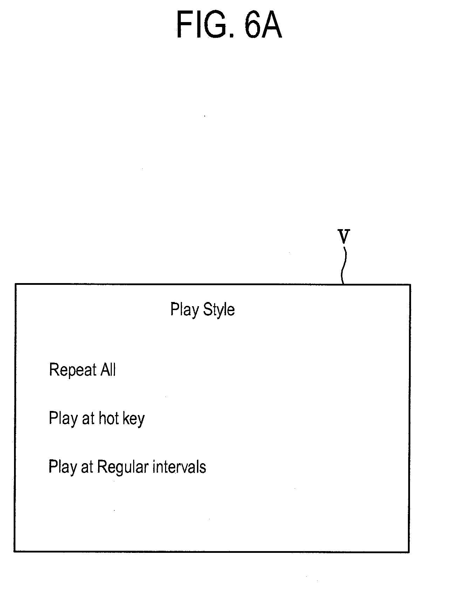

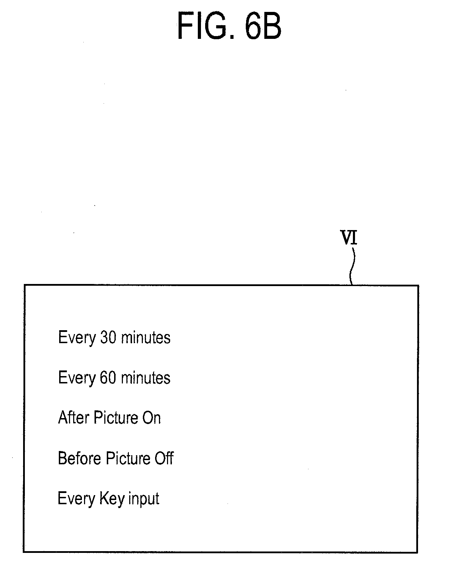

The UI generating unit 70 may generate a plurality of graphic interfaces for setting a reproduction environment of the advertisement contents in addition to the contents list (II). FIG. 5 is a menu window (IV) for the advertisement contents according to an exemplary embodiment of the present invention. FIGS. 6A to 6C are detail windows for setting the reproduction environment according to an exemplary embodiment of the present invention. The menu window (IV) for the advertisement contents may include menu items such as 'source', 'play style', 'interval', and 'picture size'. If a menu item has sub items, a mark '►' is displayed with the menu item. The 'source' is a menu item which shows the type of storage in which the advertisement contents are stored. A user may know whether the storage is external type or internal type. In another embodiment, the content list (II) may be displayed directly if the 'source' item is chosen.

The 'play style' is a menu item which is for selecting reproduction type of the advertisement contents. If a user selects the 'play style', a menu window (V) for reproduction style as shown in FIG. 6A is displayed. The menu window (V) for reproduction style may show 'repeat all' menu item for reproducing all the advertisement contents repeatedly, 'play at hot key' menu item for general reproduction, and 'play at regular intervals' menu item for interval reproduction. In the general reproduction status, the advertisement contents are reproduced only if there is a control signal for reproducing the advertisement contents. In the interval reproduction status, the advertisement contents are reproduced repeatedly with a predetermined period.

If a user chooses the 'play at regular intervals' menu item, the UI generating unit 70 displays a menu window (VI) for reproduction period on the display unit 50. The menu window (VI) for reproduction period is a window for setting reproduction time for the advertisement contents. A user may choose a specific time interval such as every 30 minutes or every 60 minutes. If a user chooses 'after power on' menu item, the advertisement contents are displayed after the display apparatus is turned on and before an image signal is displayed. If a user chooses 'before picture off' menu item, the advertisement contents are displayed before display of an image signal is finished in response to the user's command turning off the display apparatus. If a user chooses 'every key input' menu item, the advertisement contents are displayed if there is key input.

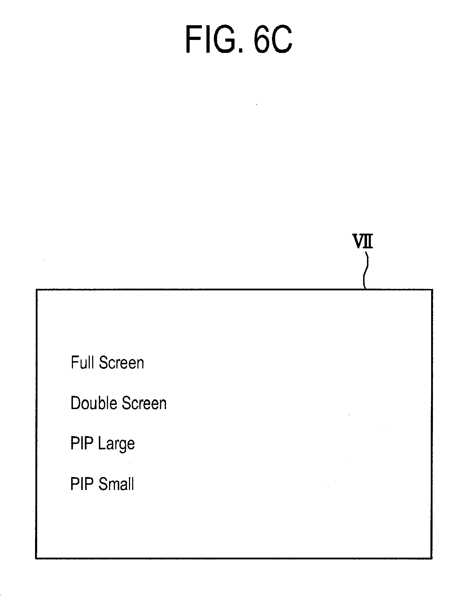

FIG. 6C is a menu window (VII) for display type according to an exemplary embodiment of the present invention. The menu window (VII) for display type is a menu window for setting the position of the display unit 50 on which the advertisement contents is displayed. If a user chooses 'fullscreen' menu item, the advertisement contents is displayed on a full screen of the display apparatus. If a user chooses 'double screen' menu item, the screen is divided into at least two areas, the advertisement contents and other images are displayed in each area, which is called a Picture Out Picture (POP) type. In a Picture In Picture (PIP) type, an image signal is displayed in the full screen at the same time as the advertisement contents are displayed in an inset window. If a user chooses 'PIP large' menu item, the advertisement contents are displayed in a large inset window. If a user chooses 'PIP small' menu item, the advertisement contents are displayed in a small inset window.

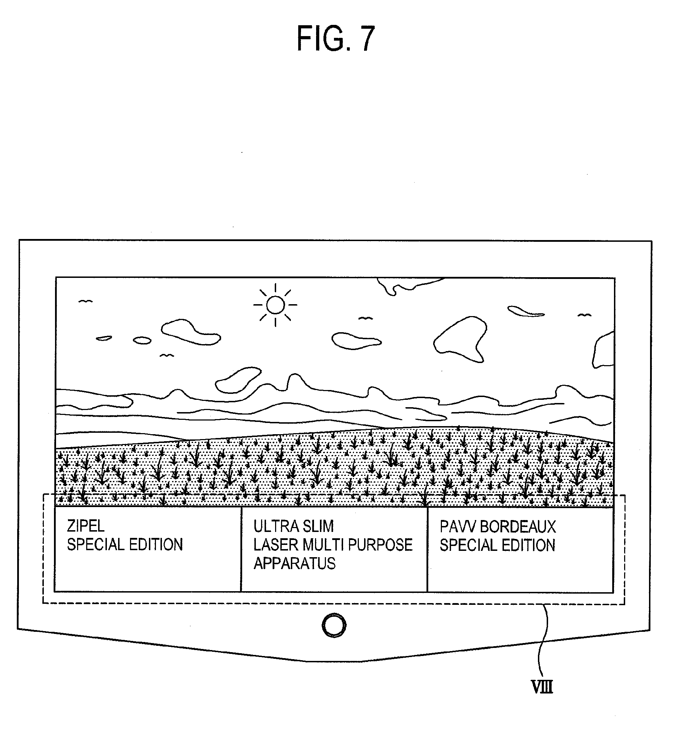

FIG. 7 illustrates a display apparatus on which the advertisement contents are reproduced according to an exemplary embodiment of the present invention. Referring to FIG. 7, advertisement contents (VIII) are displayed in a row on the lower part of the display unit 50 and include product names and versions. A user may move the displayed position of the advertisement contents to the upper part, left part, or right part of the display unit 50. A user may select to reproduce the advertisement contents simultaneously with watching a broadcast or other image. A user may select to reproduce more than two still advertisement contents simultaneously or moving image advertisement contents.

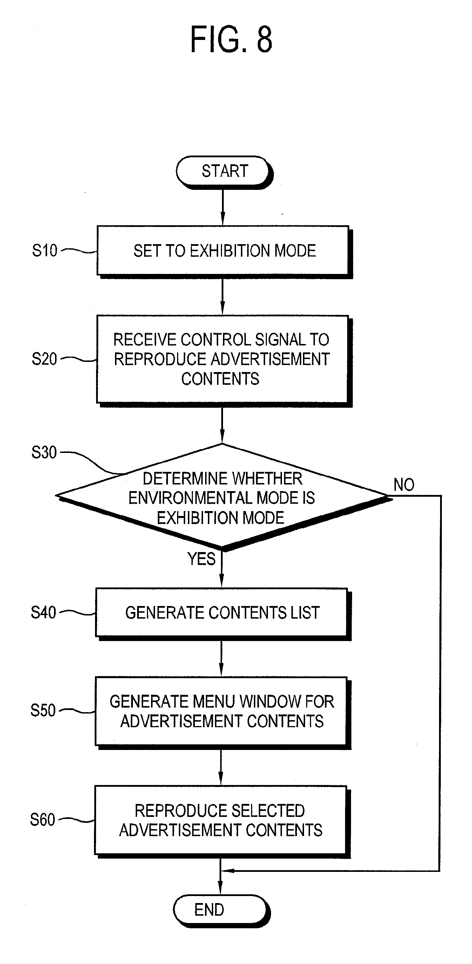

FIG. 8 is a flow chart for reproduction operations of the advertisement contents according to an exemplary embodiment of the present invention. The mode setting unit 10 sets the environmental mode to the exhibition mode according to a user selection or a preset condition (S 10). If the control signal to reproduce the advertisement contents is received (S20), the control unit 60 determines whether the environmental mode is set to the exhibition mode (S30). If the environmental mode is determined to be the exhibition mode, the control unit 60 performs operations S40 to S60 to reproduce the advertisement contents according to the control signal. If the environmental mode is not the exhibition mode, for example, if the setting of the environmental mode is changed to the general mode, the advertisement contents are not reproduced. It is possible for a user to program the display apparatus to reproduce the advertisement contents even if the environmental mode is the general mode.

The control unit 60 controls the UI generating unit 70 to generate the content list (II) of the advertisement contents stored in the storage (S40) and to generate the menu window (IV) for the advertisement contents to set various conditions for reproducing the advertisement contents (S50). A user may select the advertisement contents the user wants in the content list (II). A user may set conditions the user wants, using the menu window (V) for reproduction style, the menu window (VI) for reproduction period, the menu window (VII) for display type, etc., which correspond to sub menu windows of the menu window (IV) for the advertisement contents.

The control unit 60 controls the signal processing unit 40 to reproduce the selected advertisement contents (S60). If the control signal for displaying the advertisement contents is not input for a predetermined time after the exhibition mode was set, the control unit 60 may control the signal processing unit 40 to reproduce the stored advertisement contents sequentially.

Although exemplary embodiments of the present invention have been described for illustrative purposes, those skilled in the art will appreciate that various modifications, additions and substitutions are possible, without departing from the scope of the invention as disclosed in the accompanying claims.

## Claims

1. An apparatus, comprising:
a mode setting unit which sets an environmental mode to one of an exhibition mode and a general mode; and
a control unit which determines whether the set environmental mode is the exhibition mode and controls a signal processing unit to reproduce a predetermined advertisement contents and a display unit to display the reproduced advertisement contents if the environmental mode is the exhibition mode.

2. The apparatus of claim 1, wherein the advertisement contents have a specific file extension, wherein the control unit controls the signal processing unit to reproduce the advertisement contents based on the file extension.

3. The apparatus of claim 1 or 2, further comprising a user input unit which generates a control signal for reproducing the advertisement contents.

4. The apparatus of claim 3, further comprising at least one of: 1) a storage unit which stores at least one advertisement contents and 2) an external interface which is connected to an external storage unit which stores at least one advertisement contents.

5. The apparatus of claim 4, further comprising a user interface (UI) generating unit which generates a UI, wherein if the storage unit has a plurality of contents including the at least one advertisement contents, the control unit controls the UI generating unit to generate a content list of the at least one advertisement contents.

6. The apparatus of claim 5, wherein if the at least one advertisement contents in the content list are selected through the user input unit, the control unit controls the signal processing unit to reproduce the selected advertisement contents.

7. The apparatus of claim 6, wherein the UI generating unit generates an advertisement content menu window for controlling reproduction of the advertisement contents and the advertisement content menu window comprises at least one of sub menu windows for setting reproduction type, reproduction time, and display style.

8. The apparatus of claim 7, wherein the reproduction type comprises at least one of general reproduction, repeat reproduction, and interval reproduction and the display style comprises at least one of a full display, a picture in picture (PIP), and a picture out picture (POP).

9. The apparatus of claim 3, wherein the control unit controls the signal processing unit to reproduce the advertisement contents if there is no input of the control signal for reproducing the advertisement contents for a predetermined time.

10. The apparatus of claim 3, wherein if a setting signal for setting to the exhibition mode is received from the user input unit, the mode setting unit sets the environmental mode to the exhibition mode.

11. The apparatus of any one of the preceding claims, wherein if a setting signal for setting to the exhibition mode is not received for a predetermined time, the mode setting unit sets the environmental mode to the exhibition mode.

12. The apparatus of any one of the preceding claims, wherein the advertisement contents comprise contents related to the display apparatus and the advertisement contents comprise contents related to manufacturer of the display apparatus.

13. A control method for a display apparatus which sets an environmental mode, comprising:
setting an environmental mode to one of a general mode and an exhibition mode;
determining whether the set environmental mode is the exhibition mode; and
displaying the advertisement contents if the set environmental mode is the exhibition mode.

14. The control method of claim 13, further comprising receiving a control signal for displaying the advertisement contents and generating a content list of the advertisement contents among displayable contents.

15. The control method of claim 13, wherein if there is no input of a control signal for displaying the advertisement contents for a predetermined time after the environmental mode is set to the exhibition mode, displaying the advertisement contents.
